# EUROPEAN PATENT APPLICATION

(11) **EP 1 666 757 A2**
(43) Date of publication of application: **07.06.2006**
(21) Application number: 05025227.9
(22) Date of filing: 18.11.2005
(51) Int. Cl.: F16D 69/02

(54) **Friction device**

(30) Priority: 29.11.2004 JP 2004344250
(71) Applicant: TOYOTA JIDOSHA KABUSHIKI KAISHA, Toyota-shi, Aichi-ken, 471-8571 (JP); Advics Co., Ltd., Kariya-shi, Aichi-ken 448-8688 (JP)
(72) Inventor: Tsurubuchi, Satoru, Toyota-shi Aichi-ken 471-8571 (JP); Ikeuchi, Hitoshi, Toyota-shi Aichi-ken 471-8571 (JP); Nishiwaki, Masaaki, Toyota-shi Aichi-ken 471-8571 (JP); Ichikawa, Shigeru, Toyota-shi Aichi-ken 471-8571 (JP); Fujikawa, Hiroyuki, Kariya-shi Aichi-ken 448-8688 (JP); Wakamatsu, Satoshi, Kariya-shi Aichi-ken 448-8688 (JP); Kubota, Tatsuhisa, Kariya-shi Aichi-ken 448-8688 (JP); Nagasawa, Yuji c/o Kabushiki Kaisha Toyota Chuo, Nagakute-cho Aichi-gun Aichi-ken480-1192 (JP); Yoshida, Kazunori Kabushiki Kaisha Toyota, Nagakute-cho Aichi-gun Aichi-ken480-1192 (JP); Shimura, Yoshio Kabushiki Kaisha Toyota Chuo, Nagakute-cho Aichi-gun Aichi-ken480-1192 (JP); Hotta, Shigeru Kabushiki Kaisha Toyota Chuo, Nagakute-cho Aichi-gun Aichi-ken480-1192 (JP)
(74) Representative: Winter, Brandl, Fürniss, Hübner Röss, Kaiser, Polte Partnerschaft Patent- und Rechtsanwaltskanzlei

(57) **Abstract**

A friction device includes at least one pair of sliding surfaces which are brought into contact with each other. The friction device comprises a friction material containing silicon carbide, and a mate material in which a cermet layer containing tungsten carbide is formed in a sliding surface of the mate material.

## Description

### BACKGROUND OF THE INVENTION

### 1. Field of the Invention

The present invention relates to a friction device which is required to provide a high coefficient of friction and a high wear resistance.

### 2. Description of the Related Art

Conventionally, a friction device which causes the friction between the friction material and the rotating mate material in order to generate a braking force is known. A disc brake device is mentioned as a typical example of this friction device.

In the conventional friction device, it is common to combine the friction material composed of a composite material in which a mixture of an organic substance and an inorganic substance is hardened with an organic binding material, such as a phenol resin, with the mate material composed of a metal or a composite material in which an inorganic substance is distributed in the metal.

Weight saving and miniaturization of the friction device are the necessary elements for high performance of the friction device. To achieve the weight saving and miniaturization of the friction device, a high coefficient of friction and a high wear resistance are needed as the required characteristics of the friction device.

For example, Japanese Laid-Open Patent Application No. 2004-035871 discloses an improved friction material for raising the abrasive characteristic of the friction material, which is directed to achieving a high coefficient of friction of the friction device. However, if the abrasive characteristic of the friction material is improved, the problem arises in that the abrasion loss of the mate material also increases.

To eliminate the problem, there has been an example of the friction device in which the mate material corresponding to the friction material is composed of a SiC-based fiber reinforced composite material, instead of a metal. However, such friction device is very expensive and also has a problem that the abrasion loss of the mate material does not become small under certain situations.

Moreover, Japanese Laid-Open Patent Application No. 2001-317573 discloses an example of the friction device in which a hard cermet layer is formed on the surface of the mate material corresponding to the friction material. Although wear resistance is improved by the use of such cermet layer, there is no teaching in the above-mentioned document as to how to improve a coefficient of friction of the friction device. There is no teaching in the above-mentioned document as to how to achieve both a high coefficient of friction and a high wear resistance of the friction device.

In the conventional friction device, the coefficient of friction and the wear resistance have the complementary relations, and it is difficult for the conventional friction device to achieve both a high coefficient of friction and a high wear resistance. For example, if the abrasive characteristic of the friction material is raised in order to raise the coefficient of friction, there is a problem that the abrasion loss of the mate material increases.

In addition, there is an example of the friction device in which an increased amount of a metallic element is added to the friction material, in order to raise the adhesion characteristic and raise the frictional force. However, such a friction device has a problem in that the coefficient of friction significantly depends on the temperature and a seizure may occur.

### SUMMARY OF THE INVENTION

An object of the present invention is to provide an improved friction device in which the above-mentioned problems are eliminated.

Another object of the present invention is to provide a friction device which is capable of attaining both a high coefficient of friction and a high wear resistance.

In order to achieve the above-mentioned objects, the present invention provides a friction device including at least one pair of sliding surfaces which are brought into contact with each other, the friction device comprising: a friction material containing silicon carbide; and a mate material in which a cermet layer containing tungsten carbide is formed in a sliding surface of the mate material.

The friction device in an embodiment of the present invention means a device which generates friction when the sliding surface of the friction material and the sliding surface of the mate material mutually slide thereon.

According to the above-mentioned friction device of the invention, the silicon carbide contained in the friction material serves to attain a high coefficient of friction of the friction device, and the cermet layer formed in the sliding surface of the mate material serves to inhibit wearing of the friction material and the mate material which constitute the friction device.

The above-mentioned friction device of the invention may be configured so that the silicon carbide contained in the friction material is in a range of 5-35 volume %. According to this composition, the ease of manufacture can be maintained, a high coefficient of friction can be attained, and the friction device can be kept in an appropriate state.

The above-mentioned friction device of the invention may be configured so that the silicon carbide contained in the friction material has a mean grain size in a range of 5-80 micrometers. According to this composition, the abrasion loss of the mate material can be reduced and the manufacturing cost can be reduced.

The above-mentioned friction device of the invention may be configured so that the friction material is heat treated at a temperature in a range of 350- 700 degrees C. According to this composition, the unnecessary organic components can be removed, and if the friction device is subjected to the heat treatment at a high temperature of around 500 degrees C, the coefficient of friction can be maintained at a high state and stabilization of the high coefficient of friction can be attained under other circumstances.

A disc brake device is mentioned as an example of the friction device of the invention. The above-mentioned friction device of the invention may be configured so that the mate material is used as a rotor of a disc brake device and the friction material is used as a pad of the disc brake device. According to this composition, a disc brake device provided with a high coefficient of friction and a high wear resistance can be attained.

According to the friction device of the invention, both a high coefficient of friction and a high wear resistance can be attained.

### BRIEF DESCRIPTION OF THE DRAWINGS

Other objects, features and advantages of the present invention will become apparent from the following detailed description when read in conjunction with the accompanying drawings.

FIG. 1 is a diagram showing the composition of a disc brake device in which the friction device of the invention is embodied.

FIG. 2 is a diagram for explaining the composition of each of the embodiments of the invention and the comparative examples.

FIG. 3 is a diagram for explaining the evaluation results of the embodiments of the invention and the comparative examples.

FIG. 4 is a diagram for explaining the acceptance criteria of the evaluation results.

### DETAILED DESCRIPTION OF PREFERRED EMBODIMENTS

A description will now be provided of an embodiment of the present invention with reference to the accompanying drawings.

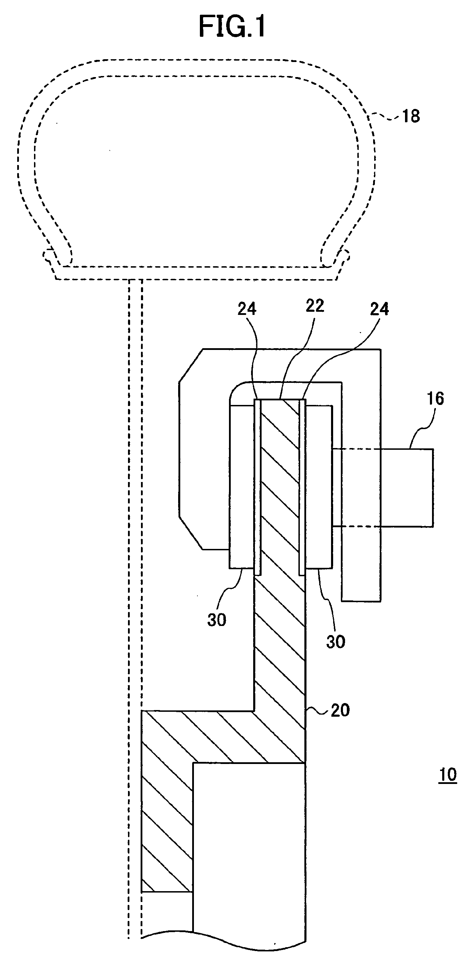

In the following, a disc brake device will be mentioned as an example of application of the friction device of this invention. FIG. 1 shows the composition of a disc brake device in which the friction device of the invention is embodied.

In the disc brake device 10 of FIG. 1, the piston 16 is driven by a fluid pressure source or a motor, so that both sides of the rotor 20 which is integrally rotated with the tire 18 are pinched by the pads 30 to generate a braking force.

In the disc brake device 10, an example of the friction material in the friction device of the invention is the pads 30, and an example of the mate material in the friction device of the invention is the rotor 20. At the time of braking, one of the sliding surfaces of the rotor 20 and the sliding surface of one of the pads 30 contact each other, and the other of the sliding surfaces of the rotor 20 and the sliding surface of the other of the pads 30 contact each other.

The rotor 20 contains a substrate 22 which is made of a metal, such as cast iron or titanium, and a cermet layer 24 which is made of a WC(tungsten carbide)-Co(cobalt) alloy and formed in the sliding surface of the substrate 22.

In the disc brake device 10 of FIG. 1, the pads 30 may be composed of a composite material which contains silicon carbide as the abrasive material and contains also the known components. The pad 30 of this embodiment comprises: the fiber substrate which forms the frame of the pad; the abrasive material which contains silicon carbide; the binding material which binds the fiber substrate to the abrasive material; and the filler material which is distributed and filled up in the matrix of the fiber substrate, the abrasive material and the binding material.

Any of a metal fiber, such as steel fiber, an organic fiber, such as aramid fiber, etc. may be used as the fiber substrate. The fiber substrate may also contain metal powders, such as copper powders, etc.

A thermosetting resin, such as phenol resin, may be used as the binding material.

Any of an inorganic filler, such as barium sulfate or calcium hydroxide, a solid lubricant, such as graphite or coke, an organic high-polymer powder, such as cashew dust (which is a cashew-oil cured substance), an abrasive agent, such as silica, and other additives for friction adjustment may be used as the filler material.

As for the silicon carbide used as the abrasive material, it is preferred that the content ratio of silicon carbide to the whole components which constitute the pad 30 is in a range of 5-35 volume %. If the content ratio of silicon carbide is below 5 volume %, the coefficient of friction becomes inadequately small. If the content ratio of silicon carbide is above 35 volume %, the binding characteristic falls and the ease of manufacture is impaired.

As for the silicon carbide used as the abrasive material, it is preferred that the silicon carbide has a mean grain size in a range of 5-80 micrometers. If the mean grain size of the silicon carbide is below 5 micrometers, grinding of the silicon carbide is difficult and the manufacturing cost increases. If the mean grain size of the silicon carbide is above 80 micrometers, the abrasion loss of the rotor 20 increases.

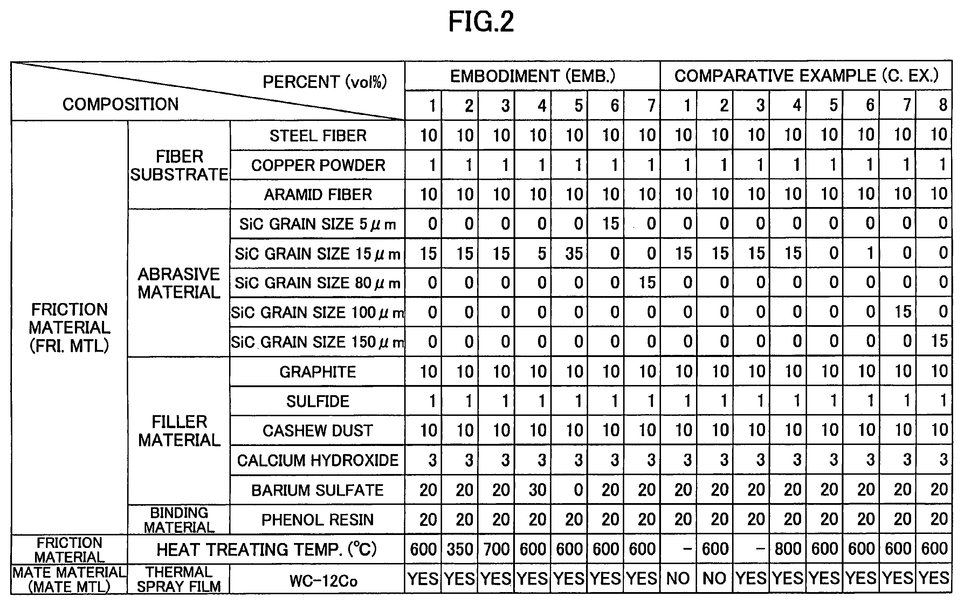

Next, a description will be given of respective friction devices of Embodiments 1-7 of the invention and Comparative Examples 1-8. Based on the composition of the components of each friction device shown in FIG. 2, the respective friction devices of the Embodiments 1-7 and the Comparative Examples 1-8 have been produced.

First, a method of producing the pad will be explained. The pad in this case corresponds to the friction material which constitutes each of the respective friction devices of the Embodiments 1-7 and the Comparative Examples 1-8 shown in FIG. 2.

The respective raw materials of the pad are mixed for 5 minutes to uniformity in a dry method by using the Eirich mixer, and the mixture of the raw materials is obtained.

The mixture of the raw materials is supplied to a die which is provided with the partition plates, so that a predetermined shape of the pad is created with the mixture of the raw materials. The die is pressurized to 200kg/cm² and heated at 160 degrees C for 10 minutes, and thermoforming of the pad is performed.

Then, the solid matter obtained by the thermoforming is cured at 230 degrees C for 3 hours. The solid matter of each of the embodiments of the invention and the comparative examples concerned after curing is subjected to heat treatment at a temperature in a range of 350-700 degrees C.

The heat treatment mentioned above is performed in the atmosphere of Ar (argon) by maintaining the solid matter at the predetermined temperature for 6 hours. Each of the thus prepared pads is bonded to the backing plate with the adhesive of a phenol resin for shape adjustment. The hardness of the silicon carbide used as the abrasive material is 2600 (Hv).

Next, a method of producing the rotor will be explained. The rotor in this case corresponds to the mate material which constitutes each of the respective friction devices of the Embodiments 1-7 and the Comparative Examples 3-8 shown in FIG. 2.

The rotor of each of the Embodiments 1-7 and Comparative Examples 3-8 is prepared as follows: thermal spraying of WC-Co powders is performed on the substrate made of a cast iron, and after the thermal spraying is performed, the surface of the rotor is ground so that the resulting rotor has a thickness of about 300 micrometers.

It is not necessary to perform the thermal spraying of the WC-Co powders on the whole substrate of the rotor, and what is necessary is just to perform the thermal spraying of the WC-Co powders only on the sliding surface of the rotor which is in contact with the sliding surface of the pad.

Next, the evaluation results of the pad and the rotor of each of the respective friction devices of the Embodiments 1-7 and the Comparative Examples 1-8 will be explained.

The friction and wear characteristics at the time of performing the JASO test are evaluated as the indexes for the friction characteristics of the rotor and the pad of each of the respective friction devices of the Embodiments 1-7 and the Comparative Examples 1-8.

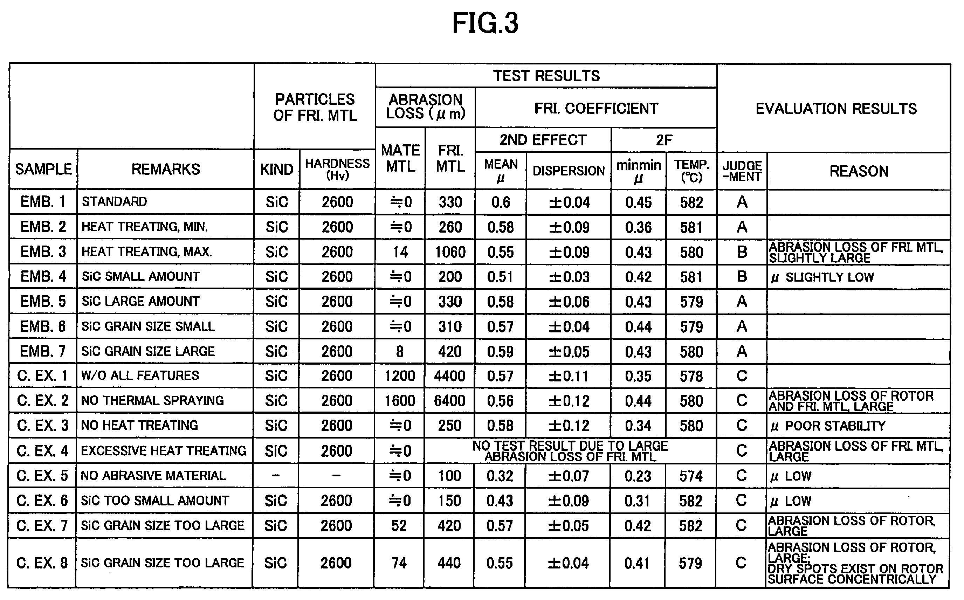

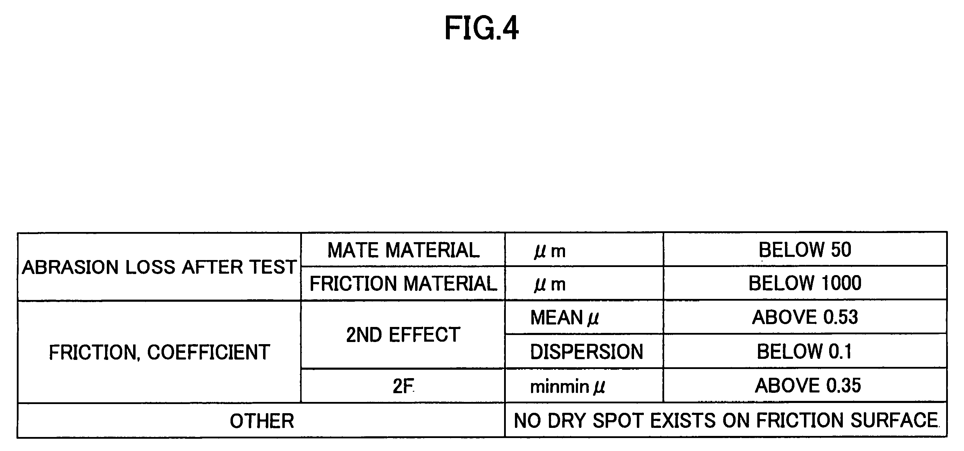

FIG. 3 is a diagram for explaining the evaluation results of the Embodiments 1-7 and the Comparative Examples 1-8. The "minmin µ" in FIG. 3 or FIG. 4 denotes the minimum value of the instantaneous coefficient of friction when the lowest braking force is generated with the average coefficient of friction.

FIG. 4 is a diagram for explaining the acceptance criteria of the evaluation results of each of the Embodiments 1-7 and the Comparative Examples 1-8. The judgment is synthetically made for the test results of each of the Embodiments 1-7 and the Comparative Examples 1-8 shown in FIG. 3 as follows.

A: all the acceptance criteria shown in FIG. 4 are satisfied and there is no test result near the acceptance criteria.

B: all the acceptance criteria shown in FIG. 4 are satisfied and there is any test result near the acceptance criteria.

C: some of the acceptance criteria shown in FIG. 4 are not satisfied.

The above-mentioned notation (A, B, C) of the judgment is used in the JUDGEMENT of the EVALUATION RESULTS column for the test results of each of the Embodiments 1-7 and the Comparative Examples 1-8 shown in FIG. 3.

As shown in FIG. 3, it is confirmed that the test results of each of the Embodiments 1-7 satisfy all the acceptance criteria shown in FIG. 4. On the other hand, the test results of each of the Comparative Examples 1-8 indicate that the coefficient of friction of the friction device is lowered or the abrasion loss of the friction device is deteriorated.

Therefore, it is confirmed that the addition of silicon carbide to the pad (which is the friction material) allows the abrasive characteristic to be improved and allows the coefficient of friction to be increased. Moreover, it is confirmed that the formation of the cermet layer containing tungsten carbide in the surface of the rotor (which is the mate material) allows the abrasion loss of each of the friction material and the mate material (which constitute the friction device) to be decreased.

More specifically, it is confirmed that, in the case where the content ratio of the silicon carbide is 5 volume % as in the Embodiment 4, all the acceptance criteria in FIG. 4 are satisfied. On the other hand, it is confirmed that, in the case where the content ratio of the silicon carbide is 1 volume % as in the Comparative Example 6, the coefficient of friction falls.

Moreover, it is confirmed that, in the case where the grain size of the silicon carbide is 80 micrometers as in the Embodiment 7, all the acceptance criteria in FIG. 4 are satisfied. On the other hand, it is confirmed that, in the case where the grain size of the silicon carbide is above 80 micrometers as in the Comparative Examples 7 and 8, the abrasion loss of the rotor increases.

Next, the difference in the evaluation results depending on the temperature of the heat treatment of the pad (which is the friction material) is taken into consideration. It is confirmed that, in the case where the cermet layer made of a WC-Co alloy is formed in the sliding surface of the rotor but no heat treatment is performed as in the Comparative Example 3, the stability of the coefficient of friction becomes poor.

However, when the heat treatment of the pad (which is the friction material) is performed at a high temperature of around 500 degrees C, the unnecessary organic components can be removed from the pad. And if the friction device is subjected to the heat treatment at a high temperature of around 500 degrees C, the coefficient of friction can be maintained at a high state and stabilization of the high coefficient of friction can be attained under other circumstances.

In order to raise the above-mentioned performance further, it is desirable to perform the heat treatment of the pad (the friction material) at a temperature in a range of 350-700 degrees C in the atmosphere of an inert gas (see the Embodiments 2 and 3).

## Claims

1. A friction device including at least one pair of sliding surfaces which are brought into contact with each other, the friction device comprising:
a friction material (30) containing silicon carbide; and
a mate material (20) in which a cermet layer containing tungsten carbide is formed in a sliding surface of the mate material.

2. The friction device according to claim 1 wherein the silicon carbide contained in the friction material (30) is in a range of 5-35 volume %.

3. The friction device according to claim 1 or 2 wherein the silicon carbide contained in the friction material (30) has a mean grain size in a range of 5-80 micrometers.

4. The friction device according to any of claims 1 to 3 wherein the friction material (30) is heat treated at a temperature in a range of 350-700 degrees C.

5. The friction device according to any of claims 1 to 4 wherein the mate material (20) is used as a rotor of a disc brake device (10) and the friction material (30) is used as a pad of the disc brake device.
